# EUROPEAN PATENT SPECIFICATION

(11) **EP 2 797 757 B1**
(45) Date of publication and mention of the grant of the patent: **13.03.2019**
(21) Application number: 12829107.7
(22) Date of filing: 27.12.2012
(51) Int. Cl.: B60C 11/03, B60C 11/12

(54) **TYRE FOR MOTORCYCLES**
REIFEN FÜR MOTORRÄDER
PNEU POUR MOTOS

(30) Priority: 30.12.2011 IT RM20110696; 26.03.2012 US 201261615455 P
(43) Date of publication of application: 05.11.2014
(73) Proprietor: Pirelli Tyre S.p.A., 20126 Milano (IT)
(72) Inventor: MISANI, Pierangelo, I-20126 Milano (IT); MARIANI, Mario, I-20126 Milano (IT)
(74) Representative: Fabiano, Piero
(86) International application number: PCT/IB2012/002803
(87) International publication number: WO 2013/098635

(56) References cited:
- EP-A1- 0 062 970
- WO-A1-2011/012977
- JP-A- 9 109 615
- JP-A- 10 044 717

## Description

### Field of the invention

The present invention relates to tyres for motorcycles. In particular, the present invention relates to tyres intended to be fitted to wheels of motorcycles having medium/large engine capacity (e.g. 600 cm³ or higher), and/or high power (e.g. 130-140 hp or higher).

### Prior art

The Applicant has noticed that this kind of motorcycles, particularly in the area of southern Europe or in areas of Europe facing the sea, is nowadays used all year round for a so-called "commuting" use. In other words, it is used for daily travelling, even over not negligible distances, for reaching and coming back from the workplace, on very different kinds of roads, often uneven and/or paved.

Generally, for this kind of use, tyres having more markedly summer features and thus not intended for use with typically winter temperatures and conditions are mainly employed.

Such tyres generally do not have, in fact, a tread pattern which is able to ensure grip on cold and/or slippery terrains, like those typically occurring during winter months.

For the scooter category, the Applicant markets tyres named Metzeler Feelfree Wintec™, suitable for winter use, which, besides envisaging a particular compound, adapted to provide, independently of the temperature, a high grip level also in cold and rainy conditions, envisage a tread pattern especially designed for ensuring proper drainage and have an arrangement of sipes adapted to promote quick heating of the compound, generally providing a greater driving safety.

Document JP 10-044717, corresponding with the preamble of claim 1, discloses a tyre for a motorcycle comprising a plurality of groves and sipes, wherein the sipes are arranged into respective blocks.

Document JP 09-109615 discloses a pneumatic tyre for motor cycle comprising transversal grooves that continuously extend from one side of the tread band to the opposite side of the tread band.

Document EP 0062 970 discloses a tyre for a two wheeled single track vehicle, provided with spaced tread blocks separated by a plurality of first grooves spaced around the tyre circumference.

### Summary of the invention

The Applicant has however noticed that the insertion of sipes can make the compound of the tyre excessively yielding at the tread band portions where the sipes are provided, causing a delay in the driving response of the tyre: this problem, on motorcycles suitable also for a more sporty driving style, can led to a worsening of the speed performance of the tyre and, in the worst case, to a reduction of its safety level.

The Applicant has found that by using a tread pattern envisaging a proper arrangement of sipes, at least some of which oblique, in the central portion, which arrangement is adapted to achieve a larger footprint area and thus a greater grip to the ground, and a distribution of sipes differentiated between the central region and the shoulder regions of the tread band, it is possible to provide tyres which are able to ensure driving safety also on cold and/or slippery terrains typical of the winter season and are also adapted to a sport use on motorcycles with medium/large engine capacity.

According to the present invention, there is the provision of a tyre for motorcycles according to claim 1.

The Applicant has noticed that such an arrangement and configuration of the sipes allows obtaining a central portion of the tread band which improves the grip, above all on uneven terrains, such as paved terrains or terrains with damaged asphalt. The Applicant believes that such an improvement is due to a more uniform pressure distribution of the tread band under the footprint. The Applicant has found, in fact, that the presence of oblique sipes in the central portion of the tread band increases the average adaptability of the tyre to the road surface unevenness, independently of the kind and direction of the encountered terrain roughness.

The Applicant has also found that the arrangement of oblique sipes in the central portion of the tread band reduces the tyre response time in the circumferential direction, favouring the transmission of information to the braking systems (e.g. ABS) while braking and thus reducing their reaction time, with advantage to the driving safety.

Finally, the Applicant has found that the distribution of sipes described above allows heating more uniformly and quickly the compound of the tyre, with advantage to the driving safety and wear evenness, above all on uneven terrains such as those in towns. The Applicant has noticed, in fact, that on this kind of terrains the driving style is generally characterised by limited lean angles and does not promote a strong and frequent interaction between the shoulder portions of the tread band and the terrain, and thus the heating of such portions. This condition appears to grow more marked during winter months, when the outer temperature tends to hinder a quick heating of the compound.

Within the framework of the present invention, by "sipe" it is meant a groove having an average width smaller than about 3 mm and, preferably, a depth of at least about 2 mm.

By "tread pattern" it is meant the representation of each point of the tread band (grooves included) on a plane perpendicular to the equatorial plane of the tyre and tangent to the maximum diameter of the tyre.

Angular measurements, and/or linear quantities (distances, widths, lengths, etc.), and/or areas are to be intended as referred to the tread patter as defined above.

Moreover, referring to the angular arrangement of the grooves or sipes formed in the tread band relative to the equatorial plane of the tyre (or to a direction parallel thereto), such an angular arrangement is to be intended, for each point of the groove or sipe, as referred to the acute angle (comprised between 0° and ±90°) defined by a rotation, in that point, made starting from the equatorial plane (or from a direction parallel thereto) up to the direction tangent to the groove or sipe passing through that point. If the rotation is made clockwise, the angle is marked with a positive sign; on the contrary, i.e. the case of a counterclockwise rotation, the angle is marked with a negative sign.

Within the framework of the present invention two angles or inclinations are said to be concordant if they have the same sign.

The following definitions further apply:
- By "tyre for motorcycles" it is meant a tyre having a high curvature ratio (typically higher than 0.200), which allows high camber angles to be reached when the motorcycle runs on a bend.
- By "equatorial plane" of the tyre it is meant a plane perpendicular to the rotation axis of the tyre and dividing the tyre into two symmetrically equal portions.
- By "circumferential" direction it is meant a direction generically directed according to the rotation direction of the tyre, or in any case only slightly inclined relative to the rotation direction of the tyre.
- By "void-to-rubber ratio" it is meant the ratio between the total area of the grooves (including the sipes) of a determined portion of the tread pattern of the tyre (possibly of the whole tread pattern) and the total area of the determined portion of the tread pattern (possibly of the whole tread pattern).
- By "void-to-rubber ratio of the sipes" it is meant the ratio between the total area of the sipes of a determined portion of the tread pattern of the tyre (possibly of the whole tread pattern) and the total area of the determined portion of the tread pattern (possibly of the whole tread pattern).
- By "axial development" L of the tread band it is meant the length of the curve defining the radially outermost profile of the tread band in a cross section of the tyre.
- By "curvature ratio" of the tyre it is meant the ratio between the distance of the radially highest point of the tread band from the maximum chord of the tyre, and the same maximum chord of the tyre, in a cross section of the tyre.
- By "average inclination" or "average angular arrangement" of a groove or sipe it is meant the arithmetic mean of the inclinations / angular arrangements of the portions forming the groove relative to the equatorial plane of the tyre (or to direction parallel thereto).

The present invention, in one or more preferred aspects, may comprise one or more of the features hereinafter presented.

Preferably, the maximum void-to-rubber ratio defined by the sipes of the said central annular portion (A) is smaller than 2%.

Preferably, the maximum void-to-rubber ratio defined by the sipes of each shoulder annular portion (B) is greater than 2%.

Preferably, the second grooves may be arranged obliquely relative to the equatorial plane (X-X) of the tyre.

Preferably, also the lateral sipes may be arranged obliquely relative to the equatorial plane (X-X) of said tyre.

Conveniently, at least one of the lateral sipes of each shoulder annular portion (B) may have an inclination ϕ ≤ 60° in absolute value relative to a direction parallel to the equatorial plane X-X.

Preferably, the number of sipes of each shoulder annular portion (B) is greater than the number of sipes of the central annular portion (A). In this framework, in the case of a sipe extending in both, i.e. the shoulder and the central, annular portions, such sipe is calculated only once and is assigned to the portion in which it has a greater extension.

The central annular portion (A) comprises a module repeated along a direction of circumferential development of the tyre. The module comprises at least two first substantially longitudinal grooves and at least the first and the second sipe.

By the expression module of the tread pattern or of a portion thereof it is meant a tread pattern portion which is repeated substantially the same in sequence along the whole circumferential development of the tread band itself or of the portion of tread band itself. The modules, while keeping the same pattern configuration, may however have different circumferential lengths.

In the module the first and the second sipe are concordantly inclined.

Such a choice allows forming in the central portion sorts of blocks, which provide moderate mobility to the central annular portion of the tread band, without reducing the stability thereof and at the same time increasing the grip thereof, so as to achieve an advantage to traction/braking.

Preferably, two circumferentially consecutive pairs of sipes, each pair being formed by a first and a second sipe, are discordantly inclined, in other words, they have opposite sign. In this preferred embodiment, the pattern has a sequence of inclined and counter- inclined pairs of sipes.

Preferably, in each module said at least first sipe may be arranged at at least one end of a first longitudinal groove.

Preferably, each first longitudinal groove may have a centre line defining an extension direction of the first longitudinal groove. The first sipe may extend substantially for at least a portion of its extension either along the continuation of the extension direction of the first longitudinal groove or along a line parallel to the latter.

Advantageously, the aforesaid choice does not introduce further deformation lines in the tread band in addition to those created by the grooves, with advantage to the stiffness of the central portion of the tread band and, therefore, to the stability of the tyre, above all in straight running, towards arising of lateral stresses.

Alternatively, the sipe may extend, substantially for at least a portion of its extension, along a line inclined relative to the continuation of the extension direction of the first substantially longitudinal groove so as to form an angle, preferably an acute angle, with the continuation of said extension direction. Preferably, the first sipe may extend from one end of the first longitudinal groove. The aforesaid choice of continuing the extension of the sipe from the end of the first groove reduces the likelihood that locally raised portions might be created on the tread surface due to discontinuities represented by the ends of the grooves/sipes, to the detriment of pressure evenness in the footprint area.

Preferably, the sipe may extend from one end of the first longitudinal groove at least up to the equatorial plane (X-X).

Preferably, the sipe may extend from one end of a first longitudinal groove to the first longitudinal groove which is circumferentially consecutive.

Preferably, the first sipe may have a length measured along its extension not smaller than 20% of the axial extension M of the central annular portion (A). Conveniently, the first sipe may have a length measured along its extension not greater than 200% of the axial extension M of the central annular portion (A).

Preferably, the first sipe may have a length measured along its extension not greater than 50% of the length of the first longitudinal groove measured along the extension thereof.

Preferably, the first sipe has a length measured along its extension not smaller than 10% of the length of the first longitudinal groove measured along the extension thereof.

Preferably, each first longitudinal groove may have a substantially curvilinear course so as to form a concavity.

Advantageously, in each module the two first substantially longitudinal grooves may be mutually staggered in the circumferential direction. Preferably, each first longitudinal groove has a width which varies along its extension.

Preferably, in each module two first sipes may be associated with each first longitudinal groove. Each first sipe may be arranged at a respective end of the first longitudinal groove.

Preferably, the tread band may have a plurality of second sipes. Conveniently, each second sipe may have a substantially curvilinear course. Preferably, in each module at least one second sipe may be arranged at at least one end of a second groove.

Advantageously, in each shoulder annular portion (B) at least one lateral sipe may be arranged alternating with a lateral groove in the circumferential direction.

Conveniently, the grooves and the sipes of the tread pattern may define altogether on the tread band a void-to-rubber ratio of at least about 10% and, preferably, not greater than about 20%.

### Brief description of the figures

Further features and advantages of the present invention will become more apparent from the following detailed description of some embodiments thereof, provided as non-limiting examples, made hereafter with reference to the accompanying drawings, wherein:
- figure 1 schematically shows a radial section of a tyre according to the invention;
- figure 2 shows a portion of the circumferential development of a first example of a tyre according to the invention to be fitted to the rear wheel of a motorcycle;
- figure 3 shows a portion of the circumferential development of a second example of a tyre according to the invention to be fitted to the front wheel of a motorcycle;
- figure 4 shows in a graph the behaviour of the void-to-rubber ratio of the sipes on the tread band of a rear tyre having the pattern of figure 2, as a function of the distance on the axial development of the tread band from the equatorial plane X-X; and
- figure 5 shows in a graph the behaviour of the void-to-rubber ratio of the sipes on the tread band of a front tyre having the pattern of figure 3, as a function of the distance on the axial development of the tread band from the equatorial plane X-X.

### Detailed description of embodiments of the invention

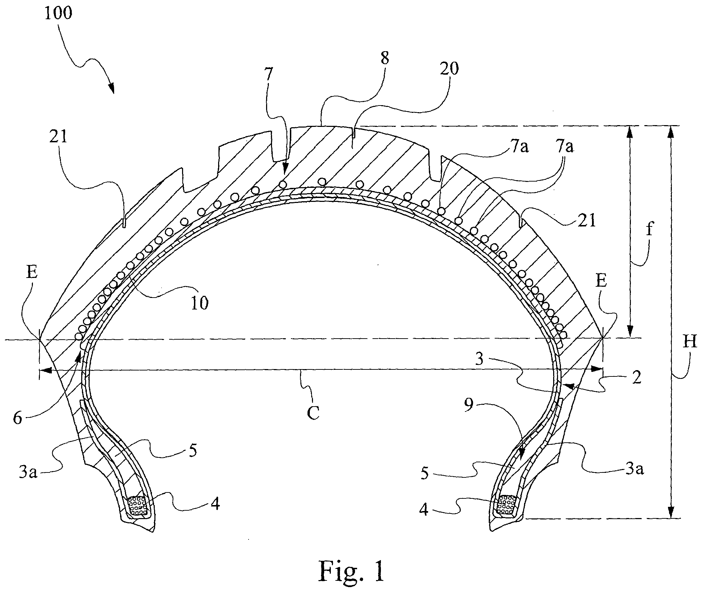

In figure 1 a tyre for motorcycle wheels according to the present invention is generally indicated at 100. The tyre 100 is preferably intended to be used on a rear wheel of a motorcycle of the "commuting" segment.

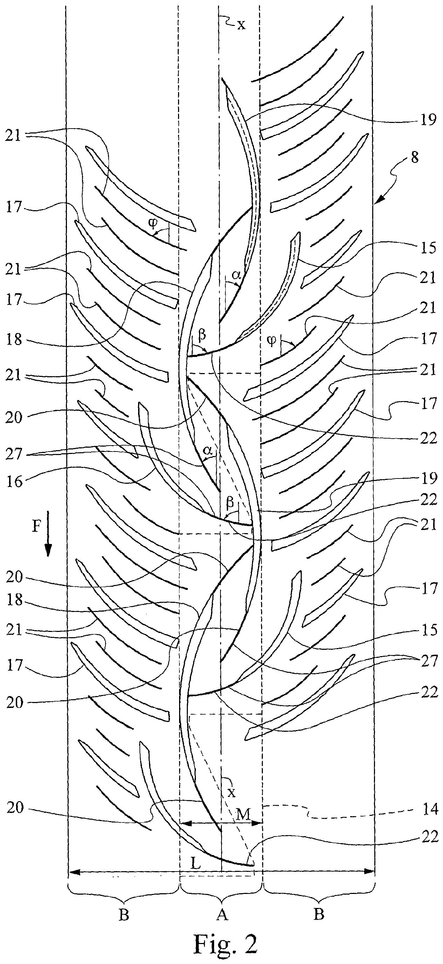

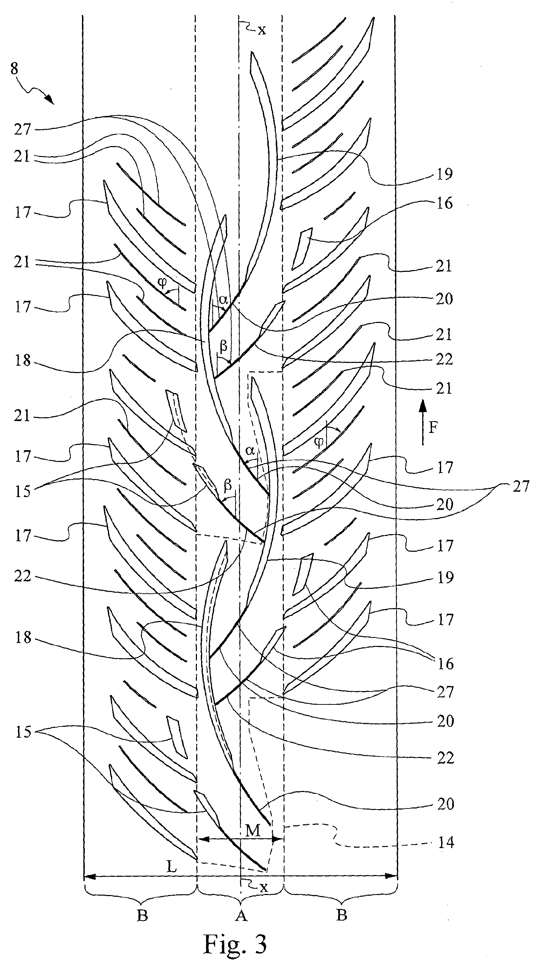

Referring also to figures 2, 3, an equatorial plane X-X and a rotation axis (not shown in the figures) are defined in the tyre 100. Moreover, a circumferential direction and an axial direction, perpendicular to the equatorial plane X-X, are defined. The arrow F indicates the rotation direction of the tyre.

The tyre 100 comprises a carcass structure 2 including at least one carcass ply 3, made of an elastomeric material and comprising a plurality of reinforcing elements.

The carcass ply 3 engages, by means of opposite circumferential edges thereof, at least one annular reinforcing structure 9.

In particular, the opposite lateral edges 3a of the carcass ply 3 are turned up about annular reinforcing structures 4 called bead cores.

A tapered elastomeric filling 5 taking up the space defined between the carcass ply 3 and the respective turned up lateral edge 3a of the carcass ply 3 is applied onto the axially outer perimeter edge of the bead cores 4.

As known, the tyre region comprising the bead core 4 and the filling 5 forms the so-called bead, intended for anchoring the tyre to a respective fitting rim, not shown.

The reinforcing elements included in the carcass ply 3 preferably comprise textile cords, selected from those usually adopted in the manufacture of carcasses for tyres, for example nylon, rayon, lyocell, PET, PEN, aramid cords.

In an embodiment not shown, the carcass structure has its opposite lateral edges associated without a turn-up with special annular reinforcing structures provided with two annular inserts. A filling of elastomeric material may be located in an axially outer position relative to the first annular insert. The second annular insert is instead located in an axially outer position relative to the end of the carcass ply. Finally, in an axially outer position relative to said second annular insert, and not necessarily in contact with the same, a further filling can be provided which terminates the formation of the annular reinforcing structure.

A belt structure 6 is circumferentially applied, in a radially outer position, onto the carcass structure 2. A tread band 8 is circumferentially superimposed on the belt structure 6. Longitudinal and/or transverse grooves, arranged so as to define a desired tread pattern, are typically formed on the tread band 8 further to a moulding operation carried out at the same time with the vulcanization of the tyre.

The tyre 100 may comprise a pair of sidewalls laterally applied on axially opposite sides to said carcass structure 2.

The tyre 100 has a cross section characterised by a high transverse curvature.

In particular, the tyre 100 has a section height H measured, at the equatorial plane, between the top of the tread band and the fitting diameter, identified by a reference line passing through the tyre beads at the bead cores 4.

The tyre 100 further has a width C defined by the distance between the laterally opposite ends E of the tread itself, and a curvature defined by the specific value of the ratio between the distance f of the top of the tread from the line passing through the ends E of the tread itself, measured at the equatorial plane of the tyre, and the aforesaid width C. The ends E of the tread may be formed by a corner.

In the present description and in the subsequent claims, by high curvature tyres, tyres are meant which have a curvature ratio f/C not smaller than 0.2, preferably f/C ≥ 0.25, for example equal to 0.28. Preferably, such curvature ratio f/C is not greater than 0.8, preferably f/C ≤ 0.5.

Preferably, the tyres have particularly low sidewalls (fig. 1). In other words, by tyres with low or lowered sidewalls, tyres are meant in which the sidewall height ratio (H-f)/H is smaller than about 0.7, more preferably smaller than about 0.65, for example equal to about 0.5.

The carcass structure 2 is typically lined on its inner walls with a sealing layer, or so-called "liner", essentially consisting of a layer of an airtight elastomeric material, adapted to ensure the tight seal of the tyre itself after it has been inflated.

Preferably, the belt structure 6 consists of a layer 7 having a plurality of circumferential windings 7a axially arranged in side-by-side relationship, formed by a rubberized cord or by a strip comprising a number (preferably, from two to five) of rubberized cords, spirally wound at an angle substantially equal to zero (typically between 0° and 5°) relative to a direction parallel to the equatorial plane X-X of the tyre.

Preferably, the belt structure extends substantially over the whole crown portion of the tyre.

In an alternative embodiment, the belt structure 6 may comprise at least two radially superimposed layers, each consisting of elastomeric material reinforced with cords arranged parallel to one another. The layers are arranged so that the cords of the first belt layer are oriented obliquely relative to the equatorial plane of the tyre, whereas the cords of the second layer also have an oblique orientation, but symmetrically crossed relative to the cords of the first layer (so-called "cross-belt").

Generally, the cords of the belt structure are textile or metallic cords.

Preferably, the tyre 100 may comprise a layer 10 of elastomeric material, located between said carcass structure 2 and said belt structure 6 formed by said circumferential coils, said layer 10 preferably extending over an area substantially corresponding to the area on which the belt structure 6 develops.

In a further embodiment, an additional layer (not shown in figure 1) of elastomeric material is located between said belt structure 6 and said tread band 8, said layer preferably extending over an area substantially corresponding to the area on which said belt structure 6 develops. Alternatively, said layer extends only over at least a portion of the development of the belt structure 6, for example over opposite lateral portions thereof.

In a preferred embodiment, at least one of said layer 10 and said additional layer comprises a reinforcing material, for example short aramid fibers, for example Kevlar® fibers, dispersed in said elastomeric material.

The tread band 8 can be divided into a central annular portion A symmetrically located astride an equatorial plane X-X and two lateral annular portions B located on axially opposite sides relative to the central annular portion A.

The central portion A is intended to contact the road surface when the motorcycle is running straight or slightly leaning, whereas the shoulder portions B are intended to contact the road surface when the motorcycle negotiates a bend, leaning more markedly.

Each central annular portion A has an axial extension M not greater than 65% of the axial development L of the tread band 8 and preferably not smaller than 10% of the axial development L of the tread band 8.

Each shoulder annular portion B has an axial extension not greater than 45% of the axial development of the tread band 8.

As shown in figures 2 and 3, on the tread band 8 a tread pattern is formed comprising a plurality of grooves 15, 16, 17, 18, 19 and sipes 20, 21, 22 which altogether define on the tread band a void-to-rubber ratio preferably greater than 10%, not higher than about 20%.

The central annular portion A comprises a module 14 repeated along a direction of circumferential development of the tyre. The module 14 is repeated along the circumferential development of the tyre preferably thirteen times at most.

The module 14 has two first substantially longitudinal grooves 18, 19, opposed to each other relative to the equatorial plane X-X, and at least one first sipe 20.

The first substantially longitudinal grooves 18, 19 extend mainly in the central annular portion A. Referring to the embodiment shown in figures 2 and 3, the first substantially longitudinal grooves 18, 19 extend for their entire extension in the central annular portion A. Visually, the boundary of the central annular portion A in the axial direction may be identified by the axially outermost portions of the first substantially longitudinal grooves 18, 19, as indicated for example by the vertical dashed lines in figures 2 and 3. The first substantially longitudinal grooves 18, 19 are at least partially facing each other, so as to delimit in the axial direction at least one portion of the tread band 8.

In other words, the first substantially longitudinal grooves 18, 19 alternate with one another on opposite sides relative to the equatorial plane X-X along the circumferential direction of the tyre, so that a first groove 18 located on one side relative to the equatorial plane X-X is circumferentially followed by a subsequent first groove 19 located on the opposite side relative to the equatorial plane X-X.

In each module the first longitudinal grooves 18, 19 have a curvilinear course adapted to define a concavity directed towards the equatorial plane X-X and are mutually staggered in the circumferential direction.

Preferably, the first substantially longitudinal grooves are mutually staggered in the circumferential direction by at least 1/2 the pitch, preferably 1/4 the pitch. This advantageously allows keeping always at least one of the first grooves 18, 19 within the footprint area during straight running, so as to ensure good drainage when running on a wet ground.

Preferably, the first substantially longitudinal grooves 18, 19 have an average inclination substantially equal to zero. In any case, the maximum inclination of the first longitudinal grooves is less than 45° in absolute value. Referring to the embodiment shown in figures 2 and 3, the first substantially longitudinal grooves 18, 19 have a maximum inclination at their ends. Preferably, the first substantially longitudinal grooves 18, 19 extend over at least about 5% of the maximum longitudinal development of the tread band 8. They are thus grooves having a substantial length, typically of the order of the longitudinal dimension of the footprint area formed by the tyre under a nominal load. This feature of the first substantially longitudinal grooves 18, 19, together with their substantially curvilinear course, allows effectively draining water when running on wet asphalt (or terrain in general). Moreover, it has been found that such an arrangement of the first grooves 18, 19 allows limiting the noise they generate while the tyre is rolling. Preferably, the first grooves 18, 19 extend over about 25% at most, more preferably over about 10% at most, of the maximum longitudinal development of the tread band 8.

In the embodiment of figure 2 the width of the first grooves 18, 19 increases in a direction opposite to the preferred rolling direction F of the tyre. This choice may be convenient for increasing water drainage in a rear tyre during straight running on wet ground. For example, the width of the first substantially longitudinal grooves 18, 19 may vary between a minimum of 2-4 mm and a maximum of 6-8 mm.

In the embodiments of figure 3 the width of the first grooves 18, 19 increases in the preferred rolling direction F of the tyre. This choice may be convenient in a front tyre, for effectively breaking and opening water films and/or layers during straight running on a wet ground.

The arrangement described above of the first substantially longitudinal grooves 18, 19 allows the extension of the footprint area of the tyre to be increased. In particular, it has been found that the increase in the extension of the footprint area is due to an increase in the width of the same. The Applicant believes that such an outcome is due to the fact that the first substantially longitudinal grooves 18, 19 create a sort of "zip", which allows moving the crown portion of the tyre radially in a region away from the equatorial plane, so as to increase the yielding thereof. Moreover, the Applicant believes that the curvilinear arrangement (i.e. an arrangement not aligned with the equatorial plane X-X, except for portions of least longitudinal extension) of the first substantially longitudinal grooves 18, 19 allows increasing the yielding of the crown region in a controlled and not excessive way, so as not to cause fatigue failure of the tread band at the first substantially longitudinal grooves 18, 19 themselves.

The first substantially longitudinal grooves 18, 19 may have a decreasing depth, which reduces from the equatorial plane X-X towards the shoulders, preferably the first substantially longitudinal grooves 18, 19 have a depth smaller than or equal to 8 mm in the case of tyres intended to be fitted to the rear wheel of a motorcycle, and smaller than 6 mm in the case of tyres intended to be fitted to the front wheel of a motorcycle.

Each module 14 further has a plurality of first sipes 20. In general, the first sipes 20 are arranged obliquely relative to a direction parallel to the equatorial plane, and may have an inclination α ≤ 60°, preferably α ≤ 45°, in absolute value, relative to a direction parallel to the equatorial plane X-X. Preferably, the first oblique sipes 20 have an average inclination smaller than 60° in absolute value relative to a direction parallel to the equatorial plane X-X.

The first sipes 20 are preferably arranged on the tread band 8 according to a substantially curvilinear course.

Preferably, referring to the embodiment of figure 3, in each module 14 there are two first oblique sipes 20, one for each first substantially longitudinal groove 18, 19.

Referring to the embodiment of figure 2, in each module 14 there are preferably four first oblique sipes 20, two for each first substantially longitudinal groove 18, 19.

Each first oblique sipe 20 is located at an end of a respective first substantially longitudinal groove 18, 19. Preferably, each first oblique sipe 20 extends from the end of a respective first substantially longitudinal groove 18, 19.

The aforesaid choice of continuing the extension of the sipe from the end of the first groove reduces the likelihood that locally raised portions might be created on the tread surface due to discontinuities represented by the ends of the grooves/sipes, to the detriment of pressure evenness in the footprint area. Each first longitudinal groove 18, 19 has a centre line defining an extension direction of the first substantially longitudinal groove 18, 19.

The first oblique sipe 20 extends substantially for at least a portion of its extension along the continuation of the extension direction of the first longitudinal groove or along a line parallel to the latter.

The aforesaid choice does not introduce further deformation lines in the tread band in addition to those created by the grooves, with advantage to the stiffness of the central portion of the tread band 8 and, therefore, to the stability of the tyre, above all in straight running, towards arising of lateral stresses.

Referring to the embodiment of figure 2, a first oblique sipe 20 extends from a first end of a first substantially longitudinal groove 18, 19, and a further first oblique groove 20 extends from a second end of a first substantially longitudinal groove 18, 19. The first oblique sipe and the further first oblique sipe have inclination opposite to each other.

Referring to the embodiment of figure 3, only one first oblique sipe 20 extends from a first end of a first substantially longitudinal groove 18, 19. Referring to the embodiments of figures 2 and 3, in each module 14 each first oblique sipe 20 extends from one end of a first substantially longitudinal groove 18, 19 to the first longitudinal groove 18, 19 which is circumferentially consecutive, crossing the equatorial plane X-X of the tyre. Preferably, each first oblique sipe 20 may have a length measured along its extension not smaller than 20% of the axial extension M of the central annular portion (A).

Conveniently, each first oblique sipe 20 may have a length measured along its extension not greater than 200% of the axial extension M of the central annular portion (A).

Advantageously, each first oblique sipe 20 may have a length measured along its extension not greater than 50% of the length of the first longitudinal groove 18, 19 measured along the extension thereof. Preferably, each first oblique sipe 20 has a length measured along its extension not smaller than 10% of the length of the first longitudinal groove 18, 19 measured along the extension thereof.

Still referring to the embodiments of figures 2 and 3, each module 14 comprises at least portions of two second grooves 15, 16 and of the second sipes 22. The second grooves 15, 16 may extend also in the shoulder annular portions (B) of the tread band 8, possibly breaking themselves as shown in the embodiment of figure 2.

The second grooves 15, 16 alternate with one another on opposite sides relative to the equatorial plane X-X along the circumferential direction of the tyre, so that a second groove 15 located on one side relative to the equatorial plane X-X is circumferentially followed by a subsequent second groove 16 located on the opposite side relative to the equatorial plane X-X. Furthermore, the second grooves 15, 16 are arranged so that on a same side of the tread band 8 relative to equatorial plane X-X each second groove is interposed in the circumferential direction between two first substantially longitudinal grooves 18, 19.

Preferably, the second grooves 15, 16 have a variable width. In particular, the second grooves may have a width which increases from the axially innermost end to the axially outermost end. For example, the width of the second grooves 15, 16 may vary from a minimum of 2-4 mm to a maximum of 6-8 mm.

The second grooves 15, 16 may have a decreasing depth, which reduces from the equatorial plane X-X towards the shoulders. Preferably the second grooves 15, 16 have a depth smaller than or equal to 8 mm in the case of tyres intended to be fitted to the rear wheel of a motorcycle, and smaller than 6 mm in the case of tyres intended to be fitted to the front wheel of a motorcycle. The second grooves 15, 16 may have an average inclination greater than that of the first substantially longitudinal grooves 18, 19.

The second sipes 22 may be arranged at at least one end of a second groove 15, 16 located in the central annular portion (A) of the tread band 8. The second sipes 22 may be arranged at respective axially innermost ends of the second grooves 15, 16. The second sipes 22 extend at least mainly in the central annular portion (A).

The second sipes 22 may have an inclination relative to a direction parallel to the equatorial plane X-X β ≤ 90°, preferably β ≤ 70°, in absolute value.

The course of the second sipes 22 may be such that their average inclination relative to a direction parallel to the equatorial plane X-X is greater (in absolute value) than the average inclination of the first sipes 20. Preferably, the second sipes 22 have an average inclination smaller than 90°, even more preferably smaller than 70°, in absolute value, relative to a direction parallel to the equatorial plane X-X.

Preferably, the second sipes 22 have a substantially curvilinear course.

Each second groove 15, 16 has a centre line defining an extension direction of the second groove itself. Each second sipe 22 extends substantially for at least a portion of its extension along the continuation of the extension direction of the first longitudinal groove or along a line parallel to the latter. Also in this case, the aforesaid choice does not introduce further deformation lines in the tread band 8 in addition to those created by the grooves 15, 16, with advantage to the stiffness of the central portion of the tread band 8 and, therefore, to the stability of the tyre, above all in straight running, towards arising of lateral stresses.

Referring to the embodiments of figures 2 and 3, in each module 14 each second sipe 22 extends from the axially inner end of a second groove 15, 16 to a first longitudinal groove 18, 19 located on an opposite side of the tread band relative to the equatorial plane X-X, crossing the latter. Advantageously, each second sipe 22 may have a length measured along its extension not smaller than 20% of the axial extension M of the central annular portion (A).

Preferably, each second sipe 22 may have a length measured along its extension not greater than 80% of the axial extension M of the central annular portion (A).

In each module 14 at least one first sipe 20 and at least one second sipe 22 are arranged so as to be circumferentially consecutive to each other, in order to form a pair 27 of sipes concordantly inclined.

Such a choice allows forming in the central portion sorts of blocks, which provide moderate mobility to the central annular portion (A) of the tread band, without reducing the stability thereof and at the same time increasing the grip thereof, with advantage to traction and braking.

For increasing the influence on the footprint on the ground, preferably two circumferentially consecutive pairs 27 of sipes are inclined discordantly relative to a direction parallel to the equatorial plane X-X: in other words, the first and second sipes 20, 22 forming a first pair 27 have an inclination with opposite sign relative to the inclination of the first and second sipes 20, 22 forming a second, circumferentially consecutive, pair 27.

Still referring to figures 2-3, each shoulder portion B has a plurality of lateral grooves 17 and lateral sipes 21.

The lateral grooves 17, as well as the lateral sipes 21, extend substantially obliquely relative to the equatorial plane X-X.

Still referring to the embodiments of figures 2 and 3, the lateral sipes 21, as well as the lateral grooves 17, of each shoulder annular portion (B) have an inclination ϕ ≤ 60° in absolute value relative to a direction parallel to the equatorial plane X-X.

Preferably, the lateral sipes have an average inclination smaller than 60°, in absolute value, relative to a direction parallel to the equatorial plane X-X. The lateral grooves 17 and the lateral sipes 21 are arranged alternated with one another in the circumferential direction. Preferably, they have a course substantially parallel to one another.

In the embodiment shown in figure 2, in each shoulder annular portion each lateral groove 17 is alternated in the circumferential direction with two lateral sipes 21.

The lateral grooves 17 preferably extend only in the shoulder annular portions B.

The lateral grooves 17 have a width which varies along their extension. Preferably, the lateral grooves 17 have a width which increases moving away from the equatorial plane X-X.

The lateral grooves 17 are arranged so as to be axially in side-by-side relationship with the first substantially longitudinal grooves 18, 19. In particular, the axially inner ends of the lateral grooves 17 may approach the first substantially longitudinal grooves 18, 19 without intersecting them (as in the embodiments shown in figure 2 and 3).

According to an important aspect of the present invention, the plurality of grooves and sipes of the tread band creates a tread pattern such that the void-to-rubber ratio defined by the first sipes 20 and second sipes 22 of the central annular portion (A) is smaller than the void-to-rubber ratio defined by the lateral sipes 21 of each shoulder annular portion (B).

The Applicant has found that such a distribution of the sipes allows heating more uniformly and quickly the compound of the tyre, with advantage to the driving safety and wear evenness, above all on uneven terrains such as those in towns. The Applicant has noticed, in fact, that on this kind of terrains the driving style is generally characterised by more limited lean angles and does not promote a strong and frequent interaction between the shoulder portions of the tread band and the terrain and thus the heating of such portions. This condition appears to grow more marked during winter months, when also the outer temperature tends to hinder a quick heating of the compound.

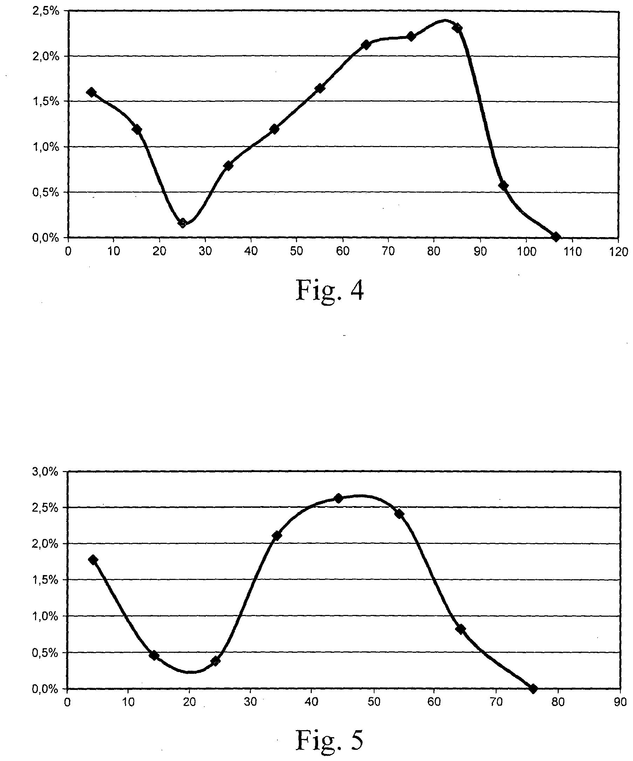

Figures 4 and 5 show graphs reporting the behaviour of the void-to-rubber ratio of the sipes starting from the equatorial plane and moving towards the shoulder regions.

In particular, in figure 4 the behaviour of the void-to-rubber ratio for a tyre intended to be fitted to the rear wheel of a motorcycle is shown, whereas in figure 5 the behaviour of the void-to-rubber ratio for a tyre intended to be fitted to the front wheel of a motorcycle is shown.

In the graphs, the percentage value of the void-to-rubber ratio of the sipes as a function of the distance in millimetres from the equatorial plane X-X is reported on the ordinate, whereas the aforesaid distance is reported on the abscissa.

For plotting the graphs, the void-to-rubber ratio of the sipes has been averaged on annular portions of the tread band having a width of about 10 mm.

The transition between the central annular portion A and the shoulder annular portion B is located between about 35 and 40 mm for the rear tyre and between about 25 and 35 mm for the front tyre.

Leaving out the axially outermost portion of the tread band, which cannot be taken into account because of the edge effect of the tyre, the graphs clearly show that the void-to-rubber ratio defined by the first and second sipes of the central annular portion A is always smaller than 2%. In other words, the maximum void-to-rubber ratio defined by the sipes of the said central annular portion (A) is smaller than 2%.

In the central annular portion A the void-to-rubber ratio has a minimum value for both the front and the rear tyre.

The Applicant has found, in fact, that in this portion of the tread band it is not necessary to have a high number of sipes, since the heating action and a greater yielding are obtained in the footprint area directly because the tyre remains for a longer time at moderate camber angles, with a resulting greater and frequent interaction between tyre and road surface in the central portion. The Applicant has actually found that increasing the presence of sipes, in terms of extension and/or number, in this region could cause the compound to become too much mobile, determining a delay in the promptness of response of the tyre.

In the shoulder annular portions B the void-to-rubber ratio has instead a maximum value for both the front and the rear tyre.

The graphs show, in fact, that the void-to-rubber ratio defined by the sipes of the shoulder annular portions (B) reaches values greater than 2%. In detail, the maximum void-to-rubber ratio defined by the sipes of the said central annular portion (A) is greater than 2%.

The Applicant has found that a large presence of sipes, in terms of number and/or extension, in this region ensures, in fact, a quick and more uniform heating of the compound of the tyre also during the coldest months.

The Applicant has noticed, in fact, that this portion of the tread band is relatively less subject to come into contact with the ground, and that a contact occurs only when the motorcycle is leaning. The Applicant has therefore found that in this portion of the tread band the insertion of sipes, according to a given percentage and extension, balances the difficulty of heating and of achieving a uniform pressure distribution due to cold months and to the less sporty driving style generally adopted on town roads.

The present invention has been described with reference to some embodiments thereof. Many modifications can be made in the embodiments described in detail, still remaining within the scope of protection of the invention, defined by the following claims.

## Claims

1. Tyre (100) for motorcycles, having a tread band (8) comprising a central annular portion (A) located astride an equatorial plane (X-X); and two shoulder annular portions (B) located on axially opposite sides relative to the central annular portion (A); the central annular portion (A) having an axial extension (M) not greater than 65% of the axial development of the tread band (8); the tread band (8) comprises a plurality of grooves and sipes adapted to define a tread pattern;
the central annular portion (A) comprises at least one first sipe (20) and a second sipe (22), circumferentially consecutive, at least one of which is inclined relative to the equatorial plane X-X of the tyre so as to form an angle a < 60° in absolute value relative to a direction parallel to an equatorial plane of the tyre;
- each shoulder annular portion (B) comprises a plurality of lateral sipes (21), the lateral sipes (21) extending essentially in the shoulder annular portion (B);
- the void-to-rubber ratio defined by the sipes of the said central annular portion (A) being smaller than the void-to-rubber ratio defined by the sipes of each shoulder annular portion;
the tyre being **characterized in that**:
- the central annular portion (A) comprises a module (14) repeated along a direction of circumferential development of the tyre comprising the first sipe (20) and the second sipe (22) and at least two first substantially longitudinal grooves (18, 19) opposed to each other relative to the equatorial plane X-X of the tyre, and wherein in each module (1) the first (20) and the second sipe (22) are concordantly inclined.

2. Tyre for motorcycles according to claim 1, wherein the lateral sipes (21) are arranged obliquely relative to the equatorial plane (X-X) of said tyre.

3. Tyre for motorcycles according to claim 1, wherein at least one of the lateral sipes (21) of each shoulder annular portion (B) has an inclination φ < 60° in absolute value relative to a direction parallel to an equatorial plane of the tyre.

4. Tyre for motorcycles according to claim 1, wherein two circumferentially consecutive pairs (27) of sipes are discordantly inclined; each pair (27) being formed by said first (20) and said second sipe (22).

5. Tyre for motorcycles according to claim 4, wherein in each module (14) said first sipe (20) is arranged at least one end of a first substantially longitudinal groove (18, 19).

6. Tyre for motorcycles according to any one of claims 1 to 5, wherein each first longitudinal groove (18, 19) has a centre line defining an extension direction of the said first substantially longitudinal groove (18, 19); said first sipe (20) extending substantially for at least a portion of its extension either along the continuation of the extension direction of the first longitudinal groove (18, 19) or along a line parallel to the latter.

7. Tyre for motorcycles according to any one of claims 1 to 6, wherein each first longitudinal groove (18, 19) has a centre line defining an extension direction of the said first substantially longitudinal groove (18, 19); said first sipe (20) extending substantially for at least a portion of its extension along a line inclined relative to the continuation of said extension direction of the said first substantially longitudinal groove (18, 19) so as to form an angle with the continuation of said extension direction.

8. Tyre for motorcycles according to any one of claims 1 to 7, wherein said first sipe (20) extends from one end of said first substantially longitudinal groove (18, 19).

9. Tyre for motorcycles according to claim 8, wherein said first sipe (20) extends from one end of said first substantially longitudinal groove (18, 19) at least up to the said equatorial plane (X-X).

10. Tyre for motorcycles according to claims 8 or 9, wherein said first sipe (20) extends from one end of a first substantially longitudinal groove (18, 19) to the first longitudinal groove (18, 19) which is circumferentially consecutive.

11. Tyre for motorcycles according to any one of the previous claims 1 to 10, wherein each first longitudinal groove (18, 19) has a substantially curvilinear course so as to form a concavity and wherein in each module (14) said two first substantially longitudinal grooves (18, 19) are mutually staggered in the circumferential direction.

12. Tyre for motorcycles according to any one of the previous claims 1 to 10, wherein each first substantially longitudinal groove (18, 19) has a width which varies along its extension.

13. Tyre for motorcycles according to any one of the previous claims 1 to 12, wherein in each module (14) there are two first sipes (20) for each first longitudinal groove (18, 19), each first sipe (20) being arranged at the end of said first substantially longitudinal groove (18, 19).

14. Tyre for motorcycles according to any one of the previous claims, wherein said first sipe (20) has a length measured along its extension not smaller than 20% of the axial extension M of the central annular portion (A).

15. Tyre for motorcycles according to any one of the previous claims, wherein said first sipe has a length measured along its extension not greater than 200% of the axial extension M of the central annular portion (A).

16. Tyre for motorcycles according to any one of the previous claims, wherein said first sipe (20) has a length measured along its extension not greater than 50% of the length of the first substantially longitudinal groove (18, 19) measured along the extension thereof, and wherein said first sipe (20) has a length measured along its extension not smaller than 10% of the length of the first substantially longitudinal groove (18, 19) measured along the extension thereof.

17. Tyre for motorcycles according to any one of the previous claims, wherein said tread band (8) has a plurality of second grooves (15,16), and wherein each second groove (15, 16) has a substantially curvilinear course.

18. Tyre for motorcycles according to claim 17 or 18, wherein said at least one second sipe (22) is arranged at - least one end of a second groove (15, 16).

## Patentansprüche

1. Reifen (100) für Motorräder mit einem Laufflächenring (8) umfassend einen zentralen ringförmigen Abschnitt (A), der zu beiden Seiten einer Äquatorialebene (X-X) angeordnet ist; und zwei ringförmige Schulterabschnitte (B), die an axial entgegengesetzten Seiten relativ zu dem zentralen ringförmigen Abschnitt (A) angeordnet sind;
wobei der zentrale ringförmige Abschnitt (A) eine axiale Ausdehnung (M) von nicht mehr als 65 % der axialen Erstreckung des Laufflächenrings (8) aufweist;
wobei der Laufflächenring (8) eine Vielzahl von Nuten und Lamellen umfasst, die dazu geeignet sind, ein Laufflächenprofil zu definieren;
wobei der zentrale ringförmige Abschnitt (A) in Umfangsrichtung aufeinanderfolgend zumindest eine erste Lamelle (20) und eine zweite Lamelle (22) aufweist, von welchen zumindest eine schräg in Bezug auf die Äquatorialebene X-X des Reifens steht, um einen Winkel a < 60° in absoluten Werten in Bezug auf eine Richtung parallel zu einer Äquatorialebene des Reifens zu bilden;
- wobei jeder ringförmige Schulterabschnitt (B) eine Vielzahl von seitlichen Lamellen (21) umfasst, wobei die seitlichen Lamellen (21) sich im Wesentlichen in den ringförmigen Schulterabschnitt (B) erstrecken;
- wobei das Gesamtverhältnis der negativen und positiven Profilanteile, das durch die Lamellen in dem zentralen ringförmigen Abschnitt (A) definiert wird, kleiner als das Gesamtverhältnis der negativen und positiven Profilanteile ist, das durch die Lamellen eines jeden ringförmigen Schulterabschnitts (B) definiert wird;
wobei der Reifen **dadurch gekennzeichnet ist, dass**:
- der zentrale ringförmige Abschnitt (A) ein Modul (14) umfasst, das entlang einer Richtung der umlaufenden Entwicklung des Reifens wiederholt wird, umfassend die erste Lamelle (20) und die zweite Lamelle (22) und zumindest zwei im Wesentlichen längsverlaufenden Nuten (18, 19), die einander in Bezug auf die Äquatorialebene X-X des Reifens entgegengesetzt sind, und wobei in jedem Modul (1) die erste (20) und die zweite Lamelle (22) übereinstimmend schräg sind.

2. Reifen für Motorräder nach Anspruch 1, wobei die seitlichen Lamellen (21) schrägverlaufend in Bezug auf die Äquatorialebene (X-X) des Reifens angeordnet sind.

3. Reifen für Motorräder nach Anspruch 1, wobei zumindest eine der seitlichen Lamellen (21) eines jeden ringförmigen Schulterabschnitts (B) eine Neigung ϕ < 60° in absoluten Werten relativ zu einer Richtung parallel zu einer Äquatorialebene des Reifens aufweist.

4. Reifen für Motorräder nach Anspruch 1, wobei zwei in Umfangsrichtung aufeinander folgende Paare (27) von Lamellen ungleich schräg sind, wobei jedes Paar (27) durch die erste (20) und zweite Lamelle (22) gebildet wird.

5. Reifen für Motorräder nach Anspruch 4, wobei in jedem Modul (14) die zumindest eine erste Lamelle (20) an zumindest einem Ende einer ersten im Wesentlichen längsverlaufenden Nut (18, 19) angeordnet ist.

6. Reifen für Motorräder nach einem der Ansprüche 1 bis 5, wobei jede erste längsverlaufende Nut (18, 19) eine Mittellinie aufweist, die eine Erstreckungsrichtung der ersten im Wesentlichen längsverlaufenden Nut (18, 19) definiert; wobei die erste Lamelle (20) sich im Wesentlichen über zumindest einen Teil ihrer Erstreckung entweder entlang der Verlängerung der Erstreckungsrichtung der ersten längsverlaufenden Nut (18, 19) oder entlang einer Linie erstreckt, die parallel zu letzterer ist.

7. Reifen für Motorräder nach einem der Ansprüche 1 bis 6, wobei jede erste längsverlaufende Nut (18, 19) eine Mittellinie aufweist, die eine Erstreckungsrichtung der ersten im Wesentlichen längsverlaufenden Nut (18, 19) definiert; wobei die erste Lamelle (20) sich im Wesentlichen über zumindest einen Teil ihrer Erstreckung entlang einer Linie erstreckt, die schräg relativ zu der Fortführung der Erstreckungsrichtung der ersten im Wesentlichen längsverlaufenden Nut (18, 19) ist, um einen Winkel mit der Fortführung der Erstreckungsrichtung zu bilden.

8. Reifen für Motorräder nach einem der Ansprüche 1 bis 7, wobei die erste Lamelle (20) sich von einem Ende der ersten im Wesentlichen längsverlaufenden Nut (18, 19) weg erstreckt.

9. Reifen für Motorräder nach Anspruch 8, wobei die erste Lamelle (20) sich von einem Ende der ersten im Wesentlichen längsverlaufenden Nut (18, 19) weg zumindest bis zu der Äquatorialebene (X-X) erstreckt.

10. Reifen für Motorräder nach den Ansprüchen 8 oder 9, wobei die erste Lamelle (20) sich von einem Ende einer ersten im Wesentlichen längsverlaufenden Nut (18, 19) zu der ersten längsverlaufenden Nut (18, 19) erstreckt, die ihr in Umfangsrichtung folgt.

11. Reifen für Motorräder nach einem der vorhergehenden Ansprüche 1 bis 10, wobei jede erste längsverlaufende Nut (18, 19) einen im Wesentlichen kurvenförmigen Verlauf hat, um eine Konkavität zu bilden, und wobei in jedem Modul (14) die zwei ersten im Wesentlichen längsverlaufenden Nuten (18, 19) zueinander in der Umfangsrichtung versetzt sind.

12. Reifen für Motorräder nach einem der vorhergehenden Ansprüche 1 bis 10, wobei jede erste im Wesentlichen längsverlaufende Nut (18, 19) eine Breite aufweist, die entlang ihrer Erstreckung variiert.

13. Reifen für Motorräder nach einem der vorhergehenden Ansprüche 1 bis 12, wobei in jedem Modul (14) zwei erste Lamellen (20) für jede erste längsverlaufende Nut (18, 19) vorhanden sind, wobei jede erste Lamelle (20) an dem Ende der ersten im Wesentlichen längsverlaufenden Nut (18, 19) angeordnet ist.

14. Reifen für Motorräder nach einem der vorhergehenden Ansprüche 4 bis 11, wobei die erste Lamelle (20) eine Länge gemessen entlang ihrer Erstreckung aufweist, die nicht weniger als 20 % der axialen Erstreckung M des zentralen ringförmigen Abschnitts (A) beträgt.

15. Reifen für Motorräder nach einem der vorhergehenden Ansprüche 4 bis 11, wobei die erste Lamelle eine Länge gemessen entlang ihrer Erstreckung aufweist, die nicht mehr als 20 % der axialen Erstreckung M des zentralen ringförmigen Abschnitts (A) beträgt.

16. Reifen für Motorräder nach einem der vorhergehenden Ansprüche, wobei die erste Lamelle (20) eine Länge gemessen entlang ihrer Erstreckung aufweist, die nicht mehr als 50 % der Länge der ersten im Wesentlichen längsverlaufenden Nut (18, 19) gemessen entlang der Erstreckung derselben beträgt, und wobei die erste Lamelle (20) eine Länge gemessen entlang ihrer Erstreckung aufweist, die nicht weniger als 10 % der Länge der ersten im Wesentlichen längsverlaufenden Nut (18, 19) gemessen entlang der Erstreckung derselben beträgt.

17. Reifen für Motorräder nach einem der vorhergehenden Ansprüche, wobei der Laufflächenring (8) eine Vielzahl von zweiten Nuten (15, 16) aufweist, und wobei jede zweite Nut (15, 16) einen im Wesentlichen kurvenförmigen Verlauf aufweist.

18. Reifen für Motorräder nach Anspruch 17 oder 18, wobei die zumindest eine zweite Lamelle (22) an zumindest einem Ende einer zweiten Nut (15, 16) angeordnet ist.

## Revendications

1. Pneu (100) pour motocycles, ayant une bande de roulement (8) comprenant une partie annulaire centrale (A) située à cheval sur un plan équatorial (X-X) ; et deux parties annulaires d'épaulement (B) situées sur des côtés opposés axialement par rapport à la partie annulaire centrale (A) ;
la partie annulaire centrale (A) ayant une extension axiale (M) ne dépassant pas 65% du développement axial de la bande de roulement (8) ; la bande de roulement (8) comprend une pluralité de rainures et de lamelles adaptées pour définir une sculpture de bande de roulement ;
la partie annulaire centrale (A) comprend au moins une première lamelle (20) et une deuxième lamelle (22), circonférentiellement consécutive, dont l'une au moins est inclinée par rapport au plan équatorial X-X du pneu de manière à former un angle a < 60° en valeur absolue par rapport à une direction parallèle à un plan équatorial du pneu ;
- chaque partie annulaire d'épaulement (B) comprend une pluralité de lamelles latérales (21), les lamelles latérales (21) s'étendant essentiellement dans la partie annulaire d'épaulement (B) ;
- le rapport vide sur caoutchouc défini par les lamelles de ladite partie annulaire centrale (A) étant inférieur au rapport vide sur caoutchouc défini par les lamelles de chaque partie annulaire d'épaulement (B) ;
le pneu étant **caractérisé en ce que** :
- la partie annulaire centrale (A) comprend un module (14) répété le long d'une direction de développement circonférentiel du pneu comprenant la première lamelle (20) et la deuxième lamelle (22) et au moins deux premières rainures sensiblement longitudinales (18, 19) opposées l'une à l'autre par rapport au plan équatorial X-X du pneu, et où dans chaque module (1), les première (20) et deuxième (22) lamelles sont inclinées de manière concordante.

2. Pneu pour motocycles selon la revendication 1, dans lequel les lamelles latérales (21) sont agencées obliquement par rapport au plan équatorial (X-X) dudit pneu.

3. Pneu pour motocycles selon la revendication 1, dans lequel au moins l'une des lamelles latérales (21) de chaque partie annulaire d'épaulement (B) a une inclinaison φ < 60° en valeur absolue par rapport à une direction parallèle à un plan équatorial du pneu.

4. Pneu pour motocycles selon la revendication 1, dans lequel deux paires (27) circonférentiellement consécutives de lamelles sont inclinées de manière discordante ; chaque paire (27) étant formée par lesdites première (20) et deuxième (22) lamelles.

5. Pneu pour motocycles selon la revendication 4, dans lequel, dans chaque module (14) ladite première lamelle (20) est agencée à au moins une extrémité d'une première rainure sensiblement longitudinale (18, 19).

6. Pneu pour motocycles selon l'une quelconque des revendications 1 à 5, dans lequel chaque première rainure longitudinale (18, 19) a une ligne centrale définissant une direction d'extension de ladite première rainure sensiblement longitudinale (18, 19) ; ladite première lamelle (20) s'étendant sensiblement sur au moins une partie de son extension le long du prolongement de la direction d'extension de la première rainure longitudinale (18, 19) ou le long d'une ligne parallèle à cette dernière.

7. Pneu pour motocycles selon l'une quelconque des revendications 1 à 6, dans lequel chaque première rainure longitudinale (18, 19) a une ligne centrale définissant une direction d'extension de ladite première rainure sensiblement longitudinale (18, 19) ; ladite première lamelle (20) s'étendant sensiblement sur au moins une partie de son extension le long d'une ligne inclinée par rapport au prolongement de ladite direction d'extension de ladite première rainure sensiblement longitudinale (18, 19) de manière à former un angle avec le prolongement de ladite direction d'extension.

8. Pneu pour motocycles selon l'une quelconque des revendications 1 à 7, dans lequel ladite première lamelle (20) s'étend depuis une extrémité de ladite première rainure sensiblement longitudinale (18, 19).

9. Pneu pour motocycles selon la revendication 8, dans lequel ladite première lamelle (20) s'étend d'une extrémité de ladite première rainure sensiblement longitudinale (18, 19) jusqu'au moins ledit plan équatorial (X-X).

10. Pneu pour motocycles selon la revendication 8 ou 9, dans lequel ladite première lamelle (20) s'étend d'une extrémité d'une première rainure sensiblement longitudinale (18, 19) jusqu'à la première rainure longitudinale (18, 19) qui est circonférentiellement consécutive.

11. Pneu pour motocycles selon l'une quelconque des revendications précédentes 1 à 10, dans lequel chaque première rainure longitudinale (18, 19) a une trajectoire sensiblement curviligne de manière à former une concavité et où, dans chaque module (14) lesdites deux premières rainures sensiblement longitudinales (18, 19) sont mutuellement décalées dans la direction circonférentielle.

12. Pneu pour motocycles selon l'une quelconque des revendications précédentes 1 à 10, dans lequel chaque première rainure sensiblement longitudinale (18, 19) a une largeur qui varie le long de son extension.

13. Pneu pour motocycles selon l'une quelconque des revendications précédentes 1 à 12, dans lequel, dans chaque module (14) il y a deux premières lamelles (20) pour chaque première rainure longitudinale (18, 19), chaque première lamelle (20) étant agencée à l'extrémité de ladite première rainure sensiblement longitudinale (18, 19).

14. Pneu pour motocycles selon l'une quelconque des revendications précédentes, dans lequel ladite première lamelle (20) a une longueur, mesurée le long de son extension, supérieure ou égale à 20% de l'extension axiale M de la partie annulaire centrale (A).

15. Pneu pour motocycles selon l'une quelconque des revendications précédentes, dans lequel ladite première lamelle a une longueur, mesurée le long de son extension, inférieure ou égale à 200% de l'extension axiale M de la partie annulaire centrale (A).

16. Pneu pour motocycles selon l'une quelconque des revendications précédentes, dans lequel ladite première lamelle (20) a une longueur, mesurée le long de son extension, inférieure ou égale à 50% de la longueur de la première rainure sensiblement longitudinale (18, 19) mesurée le long de son extension, et où ladite première lamelle (20) a une longueur, mesurée le long de son extension, supérieure ou égale à 10% de la longueur de la première rainure sensiblement longitudinale (18, 19) mesurée le long de son extension.

17. Pneu pour motocycles selon l'une quelconque des revendications précédentes, dans lequel ladite bande de roulement (8) a une pluralité de deuxièmes rainures (15, 16) et où chaque deuxième rainure (15, 16) a une trajectoire sensiblement curviligne.

18. Pneu pour motocycles selon la revendication 17 ou 18, dans lequel ladite au moins une deuxième lamelle (22) est agencée à au moins une extrémité d'une deuxième rainure (15, 16).
